# EUROPÄISCHE PATENTANMELDUNG

(11) **EP 1 785 845 A2**
(43) Veröffentlichungstag der Anmeldung: **16.05.2007**
(21) Anmeldenummer: 06122401.0
(22) Anmeldetag: 17.10.2006
(51) Int. Cl.: G06F 9/38

(54) **Verfahren zur Nutzung eines Speichers bei einer Mehrrechnervorrichtung**

(30) Priorität: 10.11.2005 DE 102005053681
(71) Anmelder: ROBERT BOSCH GMBH, 70442 Stuttgart (DE)
(72) Erfinder: Kottke, Thomas, 71139, Ehningen (DE)

(57) **Zusammenfassung**

Bei dem erfindungsgemäßen Verfahren zur Nutzung eines Speichers (2) durch mindestens zwei Prozessoren in einer Mehrrechnereinrichtung ist vorgesehen, dass der Speicher (2) in Bänke (4, 6, 8, 10) aufgeteilt wird und dass durch eine somit bereitgestellte Speicherverschränkung Zugriffe durch die mindestens zwei Prozessoren auf den Speicher (2) voneinander entkoppelt werden.

## Beschreibung

Die Erfindung betrifft ein Verfahren zur Nutzung eines Speichers, einen Speicher, eine Mehrrechnereinrichtung, ein Computerprogramm und ein Computerprogrammprodukt.

### Stand der Technik

Bei einer Zweirechnereinrichtung mit zwei Prozessoren, die zwischen zwei Modi umschaltbar ist, muss ein Speicherzugriff in einem Performancemodus der beiden Prozessoren auf einen gemeinsamen Instruktionsspeicher entkoppelt werden. Dies ist notwendig, damit sich die beiden Prozessoren nicht gegenseitig ausbremsen und ein erreichbarer Performancegewinn durch die beiden Prozessoren voll ausschöpfbar ist. Lösungsansätze bestehen derzeit in einer Verwendung von jeweils einem Cache-Speicher pro Prozessor. Dieser Cache-Speicher hat jedoch den Nachteil, sehr teuer zu sein. Alternativ könnte ein Dual Port Instruktionsspeicher verwendet werden, der jedoch verhältnismäßig teuer und langsamer als ein herkömmlicher Speicher ist.

In der Druckschrift DE 103 49 581 A1 werden ein Verfahren und eine Vorrichtung zur Umschaltung zwischen wenigstens zwei Betriebsmodi einer Prozessoreinheit beschrieben. Bei dieser Prozessoreinheit sind wenigstens zwei Ausführungseinheiten zur Abarbeitung von Programmen vorgesehen, wobei den Programmen jeweils eine Kennung zugeordnet ist, welche eine Unterscheidung der wenigstens zwei Betriebsmodi erlaubt und eine Umschaltung zwischen den Betriebsmodi in Abhängigkeit von der Kennung erfolgt, so dass die Prozessoreinheit die Programme entsprechend dem zugeordneten Betriebsmodus abarbeiten kann.

Vor diesem Hintergrund wird ein Verfahren mit den Merkmalen des Patentanspruchs 1, ein Speicher mit den Merkmalen des Patentanspruchs 7,eine Mehrrechnereinrichtung mit den Merkmalen des Patentanspruchs 8, ein Computerprogramm mit den Merkmalen des Patentanspruchs 10 und ein Computerprogrammprodukt mit den Merkmalen des Patentanspruchs 11 vorgestellt.

### Vorteile der Erfindung

Bei dem erfindungsgemäßen Verfahren zur Nutzung eines Speichers durch mindestens zwei Prozessoren in einer Mehrrechnereinrichtung ist vorgesehen, dass der Speicher in Bänke aufgeteilt wird und dass durch eine somit bereitgestellte Speicherverschränkung Zugriffe durch die mindestens zwei Prozessoren auf den Speicher voneinander entkoppelt werden.

Der erfindungsgemäße Speicher ist für eine Mehrrechnereinrichtung, die mindestens zwei Prozessoren aufweist, vorgesehen und insbesondere zur Durchführung des erfindungsgemäßen Verfahrens ausgebildet. Der Speicher ist in mehrere Bänke aufgeteilt, so dass durch eine somit bereitgestellte Speicherverschränkung Zugriffe durch die mindestens zwei Prozessoren auf den Speicher voneinander entkoppelt sind.

Die Erfindung betrifft außerdem eine Mehrrechnereinrichtung, die einen Speicher und mindestens zwei Prozessoren aufweist, wobei für die Mehrrechnereinrichtung vorgesehen ist, dass der Speicher in mehrere Bänke aufgeteilt ist und durch eine somit bereitgestellte Speicherverschränkung Zugriffe durch die mindestens zwei Prozessoren auf dem Speicher voneinander zu entkoppeln sind.

Die Mehrrechnereinrichtung ist zur Durchführung des erfindungsgemäßen Verfahrens ausgebildet. Bei dem Speicher kann es sich um den Haupt- oder Arbeitsspeicher der Mehrrechnereinrichtung handeln. Weitere vorteilhafte Ausgestaltungen ergeben sich aus den abhängigen Patentansprüchen.

Die Erfindung betrifft des weiteren ein Computerprogramm mit Programmcodemitteln, um alle Schritte des erfindungsgemäßen Verfahrens durchzuführen, wenn das Computerprogramm auf einem Computer oder einer entsprechenden Recheneinheit, insbesondere der erfindungsgemäßen Mehrrechnereinrichtung, ausgeführt wird.

Das erfindungsgemäße Computerprogrammprodukt mit Programmcodemitteln, die auf einem computerlesbaren Datenträger gespeichert sind, ist zur Durchführung aller Schritte des erfindungsgemäßen Verfahrens vorgesehen, wenn das Computerprogramm auf einem Computer oder auf einer entsprechenden Recheneinheit, insbesondere der erfindungsgemäßen Mehrrechnereinrichtung, ausgeführt wird.

Mit der Erfindung wird somit eine Entkopplung der mindestens zwei Prozessoren von dem gemeinsamen Speicher erreicht, ohne dass hierfür beispielsweise ein Cache-Speicher (Hintergrundspeicher) verwendet werden muss. Die Entkopplung der Speicherzugriffe erfolgt hierbei durch die Speicherverschränkung, wobei der Speicher ähnlich wie bei einem Desktop in Bänke aufgeteilt wird.

Die Mehrrechnereinrichtung, insbesondere eine Zweirechnereinrichtung, kann in mehreren Modi betrieben werden. Ist diesbezüglich ein Sicherheitsmodus und ein Performancemodus vorgesehen, so ist die Mehrrechnereinrichtung zwischen diesen beiden Modi umschaltbar. Die Daten werden hierzu in sicherheitskritisch und nicht-sicherheitskritisch unterteilt. Hierbei ist es vorteilhaft, wenn die sicherheitskritischen Daten oder Programmteile in einem unteren Bereich des Speichers abgelegt sind. Auf diesen unteren Speicherbereich kann in herkömmlicher Weise, wie bspw. bei einem Desktop, zugegriffen werden.

Nicht-sicherheitskritische Programmteile oder Daten werden in einem oberen Bereich des Speichers abgelegt. So ist es denkbar, dass Daten, die in einem Bereich oder Speicherbereich "10.000" stehen, nicht-sicherheitskritische Daten sind. Somit kann eine Speicherverwaltungseinheit bei einem Zugriff auf einen Bereich ab "10.000" oder auch anhand eines Core-Modussignals erkennen, dass nun ein Zugriff auf nicht-sicherheitskritische Daten erfolgt. Demnach sind die Daten nicht auf unterschiedliche Bänke aufgeteilt, sondern es ist vorgesehen, dass bspw. ein Programmteil fortlaufend in einer Bank abgelegt ist. Dazu werden die niedrigsten zwei Bits zur Adressierung in der Bank statt zur Bankauswahl verwendet. Zur Bankauswahl werden in diesem Speicherbereich die oberen zwei Bits verwendet.

Tabelle 1 zeigt hierzu ein Beispiel, bei dem Aufgaben (Tasks) fortlaufend nummeriert sind. In diesem vorliegenden Beispiel wird die Speicherbank durch die untersten zwei Bits ausgewählt. Somit liegt Wort 0 in Bank 0, Wort 1 in Bank 1 usw.

**Tabelle 1**

| reale Adresse im Speicher | Adresse für Rechner |
|---|---|
| Bank 1 0110000 | Wort 1 0110000 |
| Bank 1 0110001 | Wort 1 0110001 |
| Bank 1 0110010 | Wort 1 0110010 |
| Bank 1 0110011 | Wort 1 0110011 |

Durch das Verfahren können die Bänke des Speichers parallel und/oder unabhängig voneinander ausgelesen werden. Da ein paralleler Zugriff auf den Speicher möglich ist, kann jeder Prozessor eine maximale Geschwindigkeit des Speichers ausnutzen.

Nicht-sicherheitskritische Tasks werden in weiterer Ausgestaltung gleichmäßig auf die Bänke aufgeteilt, so dass sich innerhalb des Speichers kein so genannter Speicherverschnitt ergibt. Eine derartige gleichmäßige Aufteilung ist bei kleinen Tasks besonders einfach. Es kann des weiteren vorgesehen sein, dass Tasks in einer Bank von jeweils nur einem Prozessor ausgeführt werden. Damit dies gewährleistet ist, ist ein Programm zum Betrieb der Mehrrechnereinrichtung bzw. zur Durchführung des Verfahrens entsprechend zu entwickeln.

In bevorzugter Ausgestaltung werden sicherheitskritische Programmteile oder Tasks in dem Sicherheitsmodus ausgeführt. Nicht-sicherheitskritische Tasks können ohne Einschränkung sowohl in dem Performance- als auch in dem Sicherheitsmodus ausgeführt werden.

Es ist typischerweise vorgesehen, dass in dem Sicherheitsmodus sämtliche Bänke durch einen Prozessor belegt werden, in dem Performancemodus kann vorgesehen sein, dass jeweils einer der Prozessoren jeweils mindestens eine Bank belegt. Eine derartige Zuordnung ist sinnvoll, da sicherheitskritische Tasks in dem Performancemodus die Mehrrechnereinrichtung ausbremsen können, da dann sämtliche Bänke durch einen Prozessor benötigt werden.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im folgenden unter Bezugnahme auf die Zeichnung ausführlich beschrieben.
- Figur 1: zeigt in schematischer Darstellung eine bevorzugte Ausführungsform zur Speicherverschränkung und zum Betrieb eines Speichers.
- Figur 2: zeigt in schematischer Darstellung ein Diagramm zu einer bevorzugten Ausführungsform des erfindungsgemäßen Verfahrens.

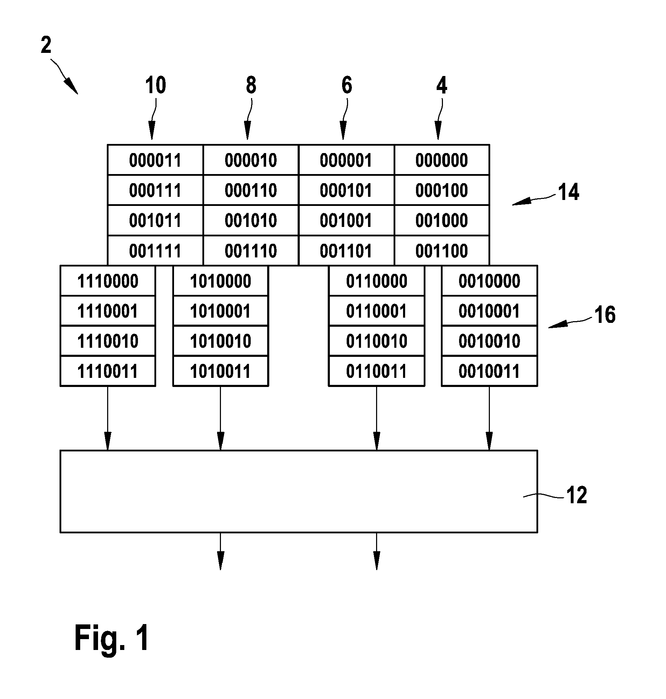

Der in Figur 1 schematisch dargestellte Speicher 2 einer Mehrrechnereinrichtung, die zwei, in der Figur 1 nicht dargestellte Prozessoren aufweist, ist in vier Bänke 4, 6, 8, 10, nämlich eine erste Bank 4, eine zweite Bank 6, eine dritte Bank 8 und eine vierte Bank 10 aufgeteilt. Durch eine derartige Aufteilung wird eine Speicherverschränkung des Speichers 2 bereitgestellt und somit eine Entkopplung von Zugriffen durch die mindestens zwei Prozessoren auf den Speicher 2 erreicht. Es ist vorgesehen, dass auf die Bänke 4, 6, 8, 10 verteilte Daten oder Tasks, die innerhalb des Speichers 2 bearbeitet werden, über eine Speicherverwaltungseinheit 12 weitergeleitet werden können.

Der Speicher 2 ist in zwei Modi betreibbar. Hierzu ist vorgesehen, dass sicherheitskritische Daten, im vorliegenden Beispiel sind jeweils vier Pakete mit derartigen Daten pro Bank 4, 6, 8, 10 dargestellt, in einem unteren Bereich 14 des Speichers 2 abgelegt sind. Nicht-sicherheitskritische Daten, hier ebenfalls jeweils vier Pakete pro Bank 4, 6, 8, 10, werden in einem oberen Bereich 16 des Speichers 2 abgelegt. Die Bänke 4, 6, 8, 10 in dem unteren Bereich 14 des Speichers 2 sind voneinander nicht getrennt, wohingegen die Bänke 4, 6, 8, 10 in dem oberen Bereich 16 des Speichers 2 voneinander getrennt sind.

Wird die Mehrrechnereinrichtung in dem Sicherheitsmodus betrieben, so ist vorgesehen, dass lediglich ein Prozessor auf sämtliche Bänke 4, 6, 8, 10 zugreift, und dabei die in dem unteren Bereich 14 abgelegten Tasks bearbeitet. Im Performancemodus erfolgt dagegen ein Speicherbanksplitting zwischen den Bänken 4, 6, 8, 10, so dass die im oberen Bereich 16 innerhalb der Bänke 4, 6, 8, 10 und somit auch die Bänke 4, 6, 8, 10 in dem oberen Bereich 16 voneinander getrennt sind. Nun kann jeweils einer der Prozessoren der Mehrrechnereinrichtung auf Daten oder Tasks jeweils mindestens einer Bank 4, 6, 8, 10 zugreifen.

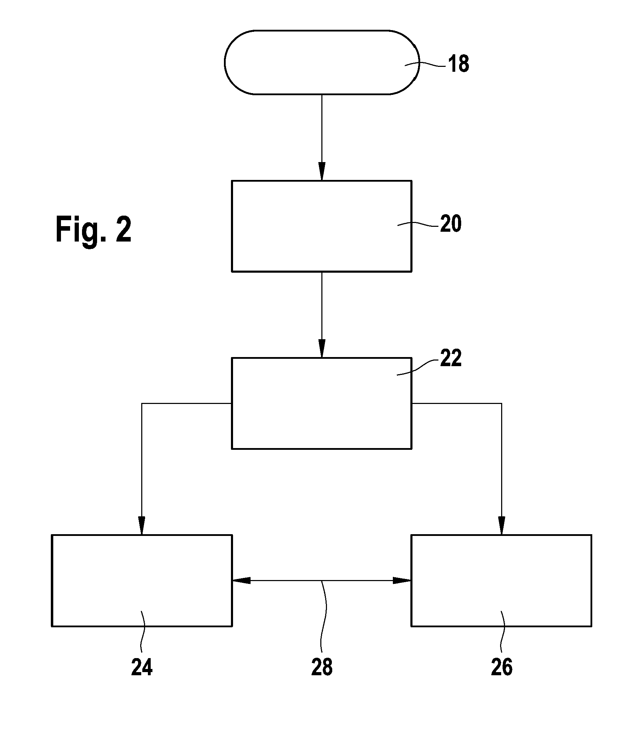

Das in Figur 2 gezeigt Diagramm zu einer bevorzugten Ausführung des Verfahrens geht von einem Startvorgang 18 der Mehrrechnereinrichtung aus. In einem ersten Schritt 20 ist vorgesehen, dass der Speicher in mehrere Bänke aufgeteilt wird und somit eine Speicherverschränkung bereitgestellt wird, aufgrund der eine Entkopplung von Zugriffen durch mindestens zwei Prozessoren auf den Speicher möglich ist. In einem nächsten Schritt 22 ist vorgesehen, Daten oder Tasks in sicherheitskritisch und nicht-sicherheitskritisch zu unterteilen, wobei sicherheitskritische Daten in einem unteren Bereich des Speichers und nicht-sicherheitskritische Daten in einem oberen Bereich des Speichers abgelegt werden.

Die Mehrrechnereinrichtung ist in zwei Modi 24, 26, hier einem Sicherheitsmodus 24 sowie einem Performancemodus 26 betreibbar, wobei eine Umschaltung 28 zwischen den beiden Modi möglich ist. In dem Sicherheitsmodus 24 greift lediglich ein Prozessor der Mehrrechnereinrichtung auf sämtliche Banken und auf die sicherheitskritischen Daten zu. Befindet sich die Mehrrechnereinrichtung in dem Performancemodus 26, so erfolgt ein Speicherbanksplitting, hierbei wird auf jeweils eine Bank nur durch einen Prozessor zugegriffen, wobei jeweils ein Prozessor auf mindestens eine Bank zugreifen kann.

## Patentansprüche

1. Verfahren zur Nutzung eines Speichers (2) durch mindestens zwei Prozessoren in einer Mehrrechnereinrichtung, bei dem der Speicher (2) in Bänke (4, 6, 8, 10) aufgeteilt wird und durch eine somit bereitgestellte Speicherverschränkung Zugriffe durch die mindestens zwei Prozessoren auf den Speicher (2) voneinander entkoppelt werden.

2. Verfahren nach Anspruch 1, bei dem die Bänke (4, 6, 8, 10) unabhängig und parallel voneinander ausgelesen werden.

3. Verfahren nach Anspruch 1 oder 2, bei dem die Mehrrechnereinrichtung zwischen einem Sicherheitsmodus (24) und einem Performancemodus (26) umgeschaltet wird.

4. Verfahren nach einem der voranstehenden Ansprüche, bei dem Daten in sicherheitskritisch und nicht-sicherheitskritisch unterteilt werden, wobei sicherheitskritische Daten in einem unteren Bereich (14) des Speichers (2) und nicht-sicherheitskritische Daten in einem oberen Bereich (16) des Speichers (2) abgelegt werden.

5. Verfahren nach einem der voranstehenden Ansprüche, bei dem jeweils ein Programmteil fortlaufend auf einer Bank (4, 6, 8, 10) abgelegt wird.

6. Verfahren nach einem der voranstehenden Ansprüche, bei dem zur Auswahl einer Bank (4, 6, 8, 10) in einem jeweiligen Bereich (14, 16) des Speichers (2) vorgesehen ist, dass die oberen zwei Bits eines Tasks zur Auswahl einer Bank (4, 6, 8, 10) und die niedrigsten zwei Bits zur Adressierung in der Bank (4, 6, 8, 10) verwendet werden.

7. Speicher, der für eine Mehrrechnereinrichtung, die mindestens zwei Prozessoren aufweist, vorgesehen und insbesondere zur Durchführung eines Verfahrens nach einem der voranstehenden Ansprüche ausgebildet ist, wobei der Speicher (2) in mehrere Bänke (4, 6, 8, 10) aufgeteilt ist, so dass durch eine somit bereitgestellte Speicherverschränkung Zugriffe durch die mindestens zwei Prozessoren auf den Speicher (2) voneinander entkoppelt sind.

8. Mehrrechnereinrichtung, die einen Speicher (2) und mindestens zwei Prozessoren aufweist, bei der vorgesehen ist, dass der Speicher in mehrere Bänke (4, 6, 8, 10) aufgeteilt ist und durch eine somit bereitgestellte Speicherverschränkung Zugriffe durch die mindestens zwei Prozessoren auf den Speicher (2) voneinander zu entkoppeln sind.

9. Mehrrechnereinrichtung nach Anspruch 8, die als Zweirechnereinrichtung mit zwei Prozessoren ausgebildet ist.

10. Computerprogramm mit Programmcodemitteln, um alle Schritte eines Verfahrens nach einem der Ansprüche 1 bis 6 durchzuführen, wenn das Computerprogramm auf einem Computer oder einer entsprechenden Recheneinheit, insbesondere einer Mehrrechnereinrichtung nach einem der Ansprüche 8 oder 9, ausgeführt wird.

11. Computerprogrammprodukt mit Programmcodemitteln, die auf einem computerlesbaren Datenträger gespeichert sind, um alle Schritte eines Verfahrens nach einem der Ansprüche 1 bis 6 durchzuführen, wenn das Computerprogramm auf einem Computer oder einer entsprechenden Recheneinheit, insbesondere einer Mehrrechnereinrichtung nach einem der Ansprüche 8 oder 9, ausgeführt wird.
